Europäisches Patentamt

European Patent Office

Office européen des brevets

(19)

(11) Numéro de publication: **0 161 194 B1**

(12) **FASCICULE DE BREVET EUROPEEN**

(45) Date de publication du fascicule du brevet:
01.06.88

(51) Int. Cl.⁴: **H 02 K 49/00**, H 02 K 51/00

(21) Numéro de dépôt: 85430008.4

(22) Date de dépôt: 26.03.85

(54) Coupleur-réducteur épicycloidal à induction pour machines à très grande vitesse de rotation.

(30) Priorité: 12.04.84 FR 8405954

(43) Date de publication de la demande:
13.11.85 Bulletin 85/46

(45) Mention de la délivrance du brevet:
01.06.88 Bulletin 88/22

(84) Etats contractants désignés:
BE CH DE FR GB IT LI

(56) Documents cités:
CH - A - 296 768
DE - C - 461 935
FR - A - 1 394 901
US - A - 2 174 662

IBM TECHNICAL DISCLOSURE BULLETIN, vol. 17, no. 6, novembre 1974, pages 1786-1787, New York, US; H.D. VARADARAJAN: "Planetary homopolar generator"

(73) Titulaire: Bech, Jean, 391 rue d'Endoume,
F-13007 Marseille (FR)

(72) Inventeur: Bech, Jean, 391 rue d'Endoume,
F-13007 Marseille (FR)

(74) Mandataire: Moretti, René et al, C/O Cabinet BEAU DE LOMENIE 14, rue Raphael, F-13008 Marseille (FR)

## Description

La présente invention a pour objet un coupleur-réducteur épicycloïdal à induction pour machines à très grande vitesse de rotation.

Le secteur technique de l'invention est celui des dispositifs pour capter l'énergie mécanique produite par une machine motrice et plus particulièrement une machine dont l'arbre de sortie est animé d'une très grande vitesse de rotation (plusieurs dizaines de milliers de tours par minute). Les machines motrices de ce genre sont essentiellement des turbines à vapeur ou à gaz. En effet, pour avoir un bon rendement, elles doivent fonctionner à des vitesses circonférentielles voisines de la vitesse d'éjection du fluide gazeux qui s'y est détendu, ce qui conduit généralement à des rotations très rapides, car cette vitesse d'éjection dépend du degré de détente obtenu dans l'élément de turbine considéré, donc de la chute de pression ou de chaleur entre l'amont et l'aval. Elle est donc d'autant plus importante que les performances visées sont élevées, souvent plusieurs centaines de mètres par seconde.

Le moyen actuellement employé pour concilier cette exigence avec des vitesses de rotation modérées consiste d'abord à fractionner la détente en un certain nombre d'étages. Cependant, bien que sensiblement réduite, la vitesse d'éjection reste de l'ordre de la centaine de mètres par seconde ou davantage. Aussi le recours à un autre artifice s'impose. Ce dernier consiste à adopter un assez grand diamètre de roue de turbine afin d'obtenir à la fois la vitesse périphérique voulue et le nombre de tours par minute de l'arbre suffisamment faible exigé par les moyens existants de captation de l'énergie mécanique produite.

Il en résulte des machines relativement lourdes et encombrantes dont le régime maximum n'excède guère 10000 T/min valeur au-delà de laquelle les réducteurs à engrenages, les coupleurs hydrauliques les transmissions électriques à champ-tournant ou leur combinaison cessent d'être utilisables.

En effet, au-delà de ce seuil, en raison des vitesses linéaires atteintes à la jante de la roue-menante, l'accouplement par engrenage n'est plus concevable, leur domaine d'utilisation étant largement dépassé. Car si la lubrification des paliers supports et de butée est encore maîtrisable, celle des dentures devient impossible. Pour les mêmes motifs compliqués par des considérations d'hydro-dynamique et de construction, les coupleurs hydrauliques sont également exclus, ainsi que les transmissions électriques par alternateur et moteur asynchrone.

Or, malgré les valeurs très importantes atteintes par les forces centrifuges, la construction de turbines compactes à plus haut régime ne présente pas davantage de difficultés que celle des turbines classiques. En effet, dans les multiples roues de grand diamètre de ces dernières, l'implantation d'aubages à leur périphérie doit tenir compte d'efforts centrifuges du même ordre, tandis que les premières peuvent être monobloc et même mono-étage à détente égale. Ainsi, dans l'état actuel des techniques de couplage et de réduction, l'utilisation de petites turbines très rapides, pour actionner des machines réceptrices limitées en régime de rotation n'est pas envisageable.

Il faut disposer d'un coupleur-réducteur capable, avec un rendement acceptable:
– de capter l'énergie mécanique disponible sur un arbre animé d'une très grande vitesse de rotation;
– de réduire cette vitesse à un niveau suffisamment bas pour pouvoir entraîner un quelconque récepteur usuel;
– de s'adapter à la turbine sans exercer d'effet nuisible sur son rotor, tel par exemple que poussées axiales ou efforts radiaux non équilibrés.

L'objectif à atteindre est un coupleur-réducteur répondant à ce besoin et utilisant des effets électromagnétiques d'induction.

On connaît déjà par le brevet CH-A-296768 un mécanisme pour convertir la vitesse de rotation entre la partie menante et la partie menée, avec une transmission de force qui s'opère sans contact de la partie menante et de la partie menée du mécanisme, au moins l'une des parties étant munie de rails conducteurs en matériau magnétisable, la forme de ces rails déterminant les rapports de mouvement entre le support de ces rails conducteurs et la seconde partie de mécanisme qui porte les pôles entraîneurs magnétiques correspondant auxdits rails conducteurs.

Dans un tel mécanisme et entre la roue d'entraînement et la roue entraînée, sont montées à la façon de satellites, des roues intermédiaires. On peut alors soit équiper la roue d'entraînement et la roue entraînée avec les pôles entraîneurs et les roues intermédiaires avec les rails conducteurs, ou inversement rapporter les pôles entraîneurs sur les roues intermédiaires et les rails conducteurs sur la roue d'entraînement et sur la roue entraînée.

La présente invention vise à apporter des perfectionnements à de tels mécanismes et à pour objet un coupleur-réducteur à induction pour machines à très grande vitesse de rotation utilisant en lieu et place des dentures d'engrenage du classique réducteur mécanique à train épicycloïdal dont il est issu, des effets électromagnétiques d'induction et mécaniques de roulement et comportant un rotor-menant et un rotor-mené par l'intermédiaire de satellites porteurs d'un champ magnétique y engendrant des courants induits qui, par réaction sur ce champ inducteur, provoquent avec un certain glissement l'entraînement en rotation des satellites, caractérisé en ce que le rotor-menant comporte au moins un collet coopérant avec lesdits satellites, lesquels sont contraints de rouler sans patiner sur des pistes circulaires concentriques au rotor-menant par l'intermédiaire de leurs moyeux-porteurs, ceux-ci y étant appliqués par la force centrifuge, ce mouvement résultant étant capté par les flasques d'une cage porte-satellites et est transmis à l'arbre de sortie dont elle est solidaire, réalisant ainsi la réduction de vitesse selon un rapport réel égal au rapport théorique majoré du glissement nécessaire et admis. Le coupleur selon l'invention comporte en outre au moins une couronne périphérique fixe, laquelle couronne est constituée par un segment écartable et est placée dans l'entrefer des satellites de manière à être elle aussi le siège de courants induits s'opposant à la rotation des satellites en cas de patinage des moyeux sur les pistes, constituant ainsi une denture magnétique latente assistant éventuellement l'effet mécanique de roulement dans la transmission du couple capté.

Dans un mode de réalisation, lesdits satellites sont constitués d'un corps axial à deux moyeux porteurs avec voile central constituant le pôle commun à deux circuits magnétiques distincts; ces deux circuits se composent chacun d'une carcasse en forme de cloche solidaire du corps axial, serrée par l'intermédiaire d'une bague de roulement rapportée, recevant dans un logement soit un aimant permanent annulaire, soit une bobine inductrice, éventuellement sur l'axe de rotation un aimant permanent annulaire d'appoint, ces deux circuits magnétiques se fermant d'une part sur les collets du rotor-menant, d'autre part sur une couronne-génératrice, lesdits collets et couronne-génératrice étant en métal magnétique ou non, ou rendu magnétique par insertion de noyaux ferreux dans les zones traversées par le champ. Lesdits satellites sont comme source du champ magnétique des bobines inductrices dont le courant continu d'excitation est fourni par la machine elle-même, ce courant provenant de la tension continue induite engendrée par la rotation des satellites sur eux-mêmes dans leur propre carcasse magnétique au cloche, la tension continue résultant du mouvement relatif au sein des cloches du champ magnétique maintenu malgré leur rotation dans le plan fixe contenant les collets du rotor-menant, par l'effet de perméabilité de leur métal constituant le courant électriques s'établissant depuis les cloches électriquement isolées de leur noyau à travers les bobines, cette disposition évitant un système de contact tournant.

Dans un autre mode de réalisation, lesdits satellites ont comme source du champ magnétique des bobines inductrices dont le courant continu d'excitation est fourni par la machine elle-même, ce courant provenant de la tension continue induite engendrée par la rotation des satellites sur eux-mêmes, dans deux couronnes génératrices, la tension continue induite est engendrée par la rotation du champ uniformément réparti entre les joues polaires s'exerçant dans les couronnes génératrices, le courant étant collecté à l'aide d'un système à contact tournant constitué par des rondelles élastiques en métal non magnétique s'appuyant sur des bagues isolées connectées à l'un des fils + ou − des bobines, l'autre étant à la masse, fermant le circuit. Les deux couronnes portées par les entretoises électriquement isolées de la masse par les douilles et entraînés en rotation avec la cage porte-satellite à la vitesse réduite de l'arbre de sortie, sont, en fonctionnement normal, en court-circuit, soit par leur appui mutuel, soit au moyen de balais extérieurs commutables, lesdites couronnes étant dans ce dernier cas, non pas en contact mais isolées entre-elles, lesdits balais frottant à leur périphérie permettent l'alimentation des bobines par une source extérieure de courant continu, ce qui, en vertu de la réversibilité des machines électriques autorise l'utilisation dudit coupleur-réducteur comme moteur de lancement. Lesdits satellites ont leurs moyeux porteurs qui tourillonnent dans des encoches ménagées dans les flasques, ouvertes vers la piste de roulement afin que le palier ainsi constitué, tout en transmettant l'effort tangentiel du couple de sortie, soit soustrait à l'effort très important dû à la force centrifuge totalement supporté par la couronne.

Le coupleur-réducteur selon l'invention dont toutes les parties tournantes sont graissées et refroidies par circulation, au moyen d'une pompe, d'un fluide lubrifiant et réfrigérant, comporte en outre un palier-distributeur inroduisant ledit fluide grâce à des canaux radiaux aménagés dans le tourillon du flasque situé du côté de l'arbre de sortie, dans un canal axial foré dans le rotor-menant tournant à très grande vitesse, afin de mettre à profit la force centrifuge pour propulser le lubrifiant par des conduits radiaux desservant ainsi sous forte pression et grand débit les paliers, butées, conduits, entrefers vers lesdits moyeux-porteurs et lesdites pistes de roulement.

Le rotor-menant est porté par deux paliers aménagés chacun dans l'un des flasques servant en outre d'appui aux deux collets de butée, ces paliers étant du type à bague lisse libre selon la technique employée dans les petites turbo-soufflantes de moteurs à combustion interne afin de pouvoir tourner aux mêmes vitesses qu'elles.

Ledit coupleur-réducteur est accouplable à une mini ou micro-turbine au moyen d'un arbre de transmission d'une relativement faible section aux extrémités cannelées avec écrou spécial de prise de force constituant ainsi une transmission coulissante de très faible masse, de telle sorte que les efforts centrifuges et axiaux nuisibles, susceptibles de s'exercer sur les rotors de la turbine et du réducteur, sont limités à des valeurs admissibles.

Ledit coupleur-réducteur trouve notamment son application à une turbo-soufflante de suralimentation pour moteur à combustion interne étant utilisé comme turbine-motrice à gaz, équipée de chambres de combustion avec brûleur recevant l'air débité par la soufflante et le combustible liquide ou gazeux contrôlé par un régulateur, l'air fortement échauffé et mélangé aux gaz de combustion se détend dans la turbine, réalisant le cycle classique à air chaud avec récupération de chaleur dont celle dégagée par effet joule dans ce coupleur-réducteur, auquel est adjoint, si nécessaire, un deuxième étage de réduction mécanique à engrenages placé à la sortie, et se caractérise en ce qu'il constitue, en tant que coupleur, le moyen de réaliser, à partir de ladite mini ou micro-turbine, le moteur d'entraînement d'un quelconque récepteur: générateur électrique, propulseur à roue-motrice ou à hélice.

En tant que système de transmission d'énergie mécanique, ce coupleur-réducteur à induction est adaptable à toutes sortes de machines motrices très rapides, telles que les turbines à gaz et à vapeur notamment.

Inversement, il peut être employé comme multiplicateur de vitesse à partir d'un moteur quelconque à bas régime, pour entraîner des récepteurs à rotation rapides, centrifugeuse par exemple ou compresseur-centrifuge pour recompression mécanique de la vapeur (économies d'énergies).

La présente invention trouve également son application à une turbo-soufflante de suralimentation existante pour moteur à combustion interne, afin de réaliser économiquement de petites turbines motrices à gaz légères et peu encombrantes.

Il existe en effet de nombreux modèles de turbo-compresseurs de plus en plus répandus avec la vogue actuelle des moteurs à combustion interne turbo-chargés, qui tournent couramment de 20 000 à 50 000 T/min et davantage (jusqu'à 130 000 t/min).

Comme indiqué précédemment, il n'y a actuellement aucun moyen de capter la force motrice disponible sur l'arbre d'une telle machine afin de l'utiliser en moteur.

Or, ce nouveau coupleur-réducteur le permet.

L'invention couvre donc aussi l'emploi d'un turbo-compresseur existant pour en faire une mini ou micro-turbine à gaz (Pl. 8/10, fig. 15). Ce turbomoteur, adaptabe pour divers carburants, et dont l'arbre de sortie tourne à une vitesse considérablement réduite, peut entraîner une gamme très étendue de machines réceptrices, par exemple un alternateur à 3000 T/min 50.

Il est possible en effet de compléter le système par un régulateur de vitesse centrifuge placé sur l'arbre de sortie, afin de contrôler l'alimentation en combustible de brûleur 49, incorporé à la chambre de combustion 47, laquelle reçoit l'air débité par le compresseur 48. L'air comburant étant prélevé sur ce débit au cours de la combustion, l'excès d'air fortement échauffé et mélangé aux gaz se détend dans la turbine, le cycle continu classique de la turbine à air chaud étant ainsi réalisé (cycle théorique de joule).

Par ailleurs, la réversibilité de la machine électro-magnétique que constitue ce coupleur-réducteur lui donne la possibilité de l'utiliser comme lanceur de cette turbine à gaz motrice. Ainsi, pendant que la pompe à huile, indépendante ou attelée assure le pré-graissage des paliers, le compresseur ventile des chambres de combustion éliminant les risques d'explosion lors de l'allumage.

D'autres avantages et les caractéristiques de l'invention ressortiront à la lecture de la description d'un coupleur-réducteur donnée à titre d'exemple en référence au dessin sur lequel:

La fig. 1 est une vue en coupe partielle schématique du dispositif selon l'invention;

la fig. 2 est une vue en perspective schématique dudit dispositif illustrant le principe de fonctionnement;

la fig. 3 est une vue suivant F du dispositif de la fig. 1;

la fig. 4 est une vue en coupe longitudinale passant par l'axe d'un satellite;

la fig. 5 est une vue en coupe transversale selon la ligne V–V de la fig. 4;

la fig. 6 est une coupe transversale selon la ligne VI–VI de la Fig. 4;

la fig. 7 est une coupe transversale selon la ligne VII–VII de la fig. 4;

la fig. 8 est une vue en perspective/coupe laissant apparaître la disposition des composants du dispositif selon l'invention;

la fig. 9 est un diagramme développé illustrant les trajectoires épicycloïdales à la périphérie des satellites;

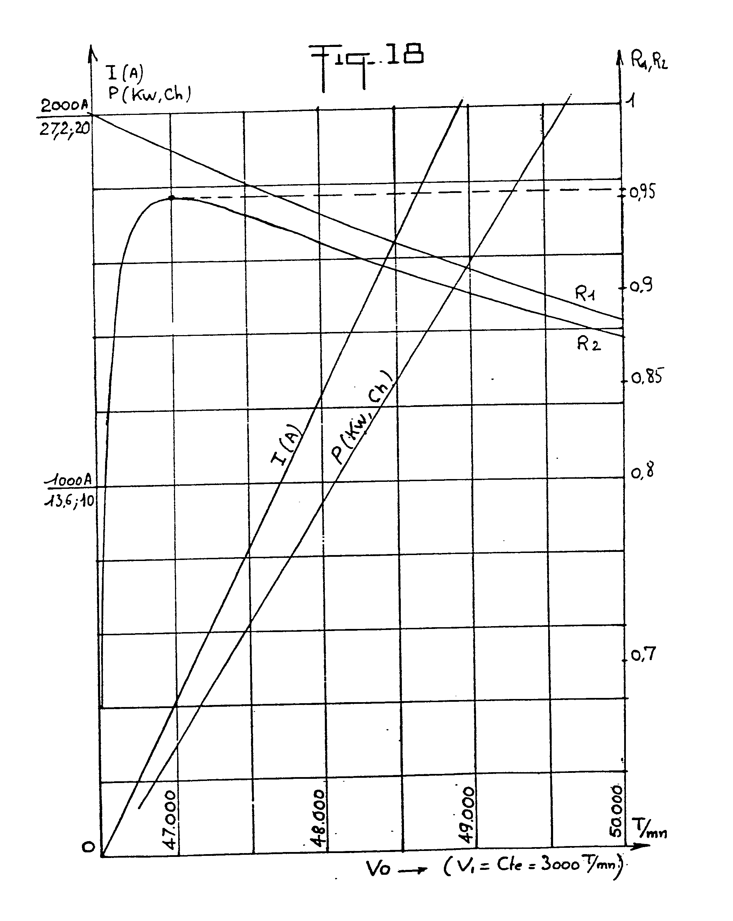

la fig. 10 est une vue en coupe longitudinale partielle illustrant un mode d'alimentation électrique par une source extérieure;

la fig. 11a est une vue en coupe longitudinale du rotor-menant en alliage léger avec noyau en métal magnétique;

la fig. 11b est une vue suivant $F_1$ du rotor de la fig. 11a;

la fig. 12 est une vue schématique illustrant les zones actives du rotor-menant et d'un satellite illustrant le mode d'action du champ magnétique et la circulation des courants induits dans le rotor;

la fig. 13 est une vue schématique illustrant le décalage existant à grande vitesse entre le courant et le champ induit (sustentation magnétique);

la fig. 14 est une vue en coupe longitudinale de l'écrou spéciale de prise de force sur la turbine de la fig. 15;

la fig. 15 est une vue en coupe longitudinale d'un ensemble illustrant une application du dispositif selon l'invention à un turbo-alternateur;

la fig. 16 est une vue en coupe longitudinale d'un satellite illustrant la disposition d'un pont de redressement à diodes;

la fig. 17 est un schéma électrique du dispositif illustré à la fig. 16;

la fig. 18 est un diagramme donnant les courbes de puissance, d'intensité induite et de rendement du dispositif selon l'invention pour une machine de l'ordre de 25 Kw.

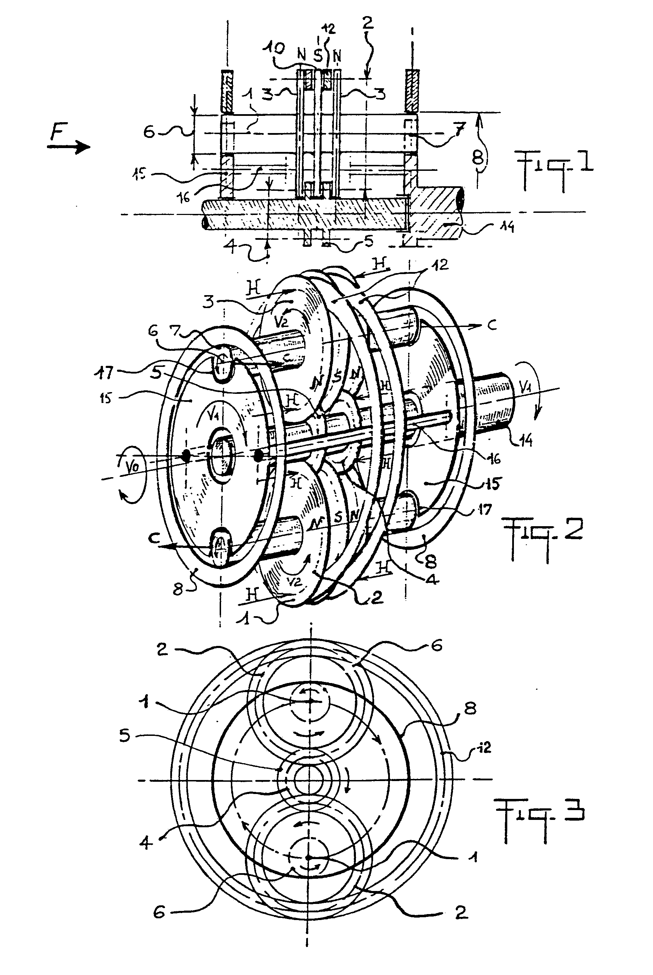

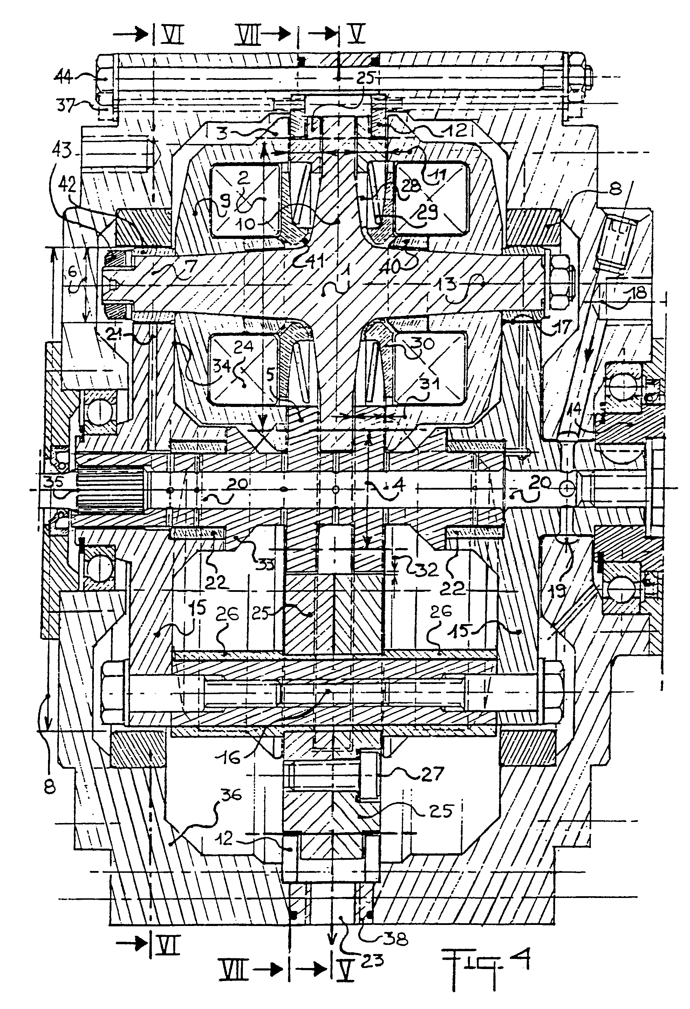

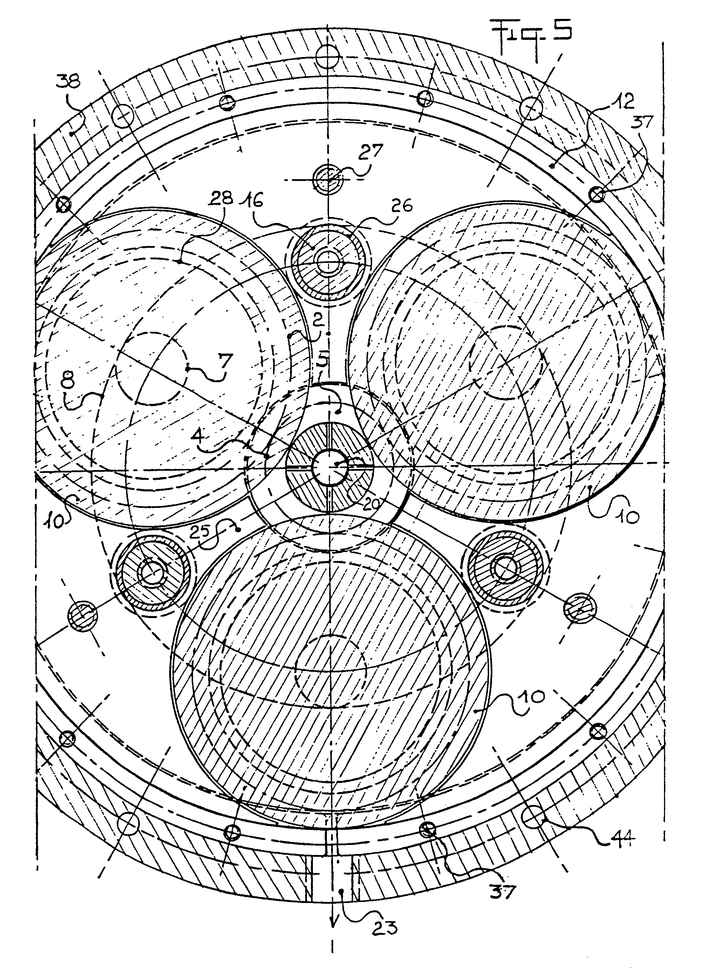

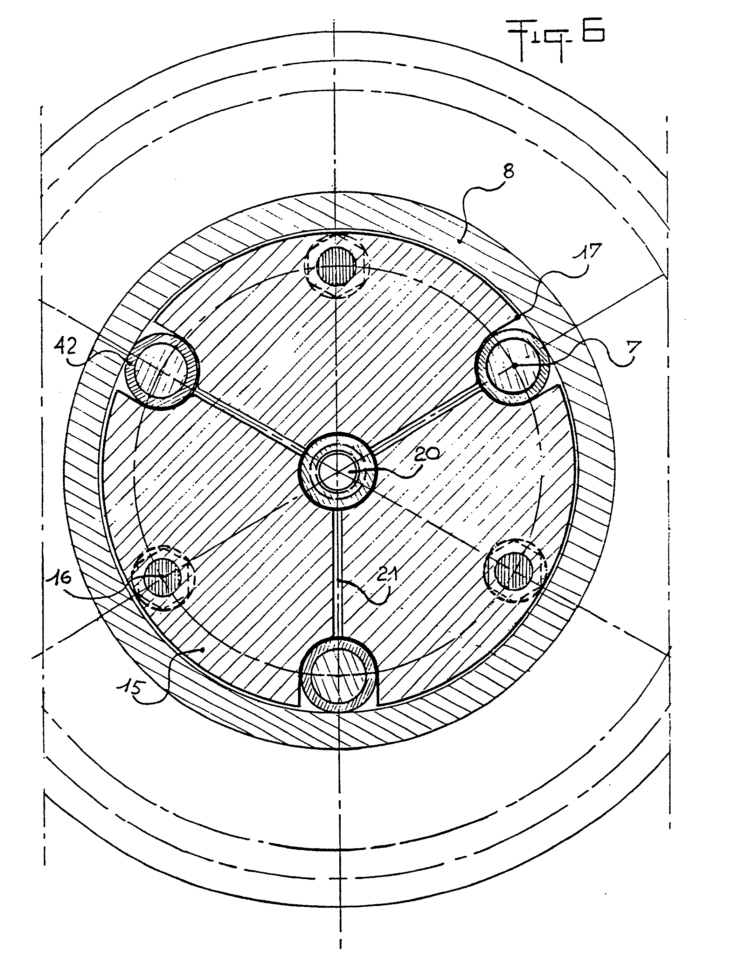

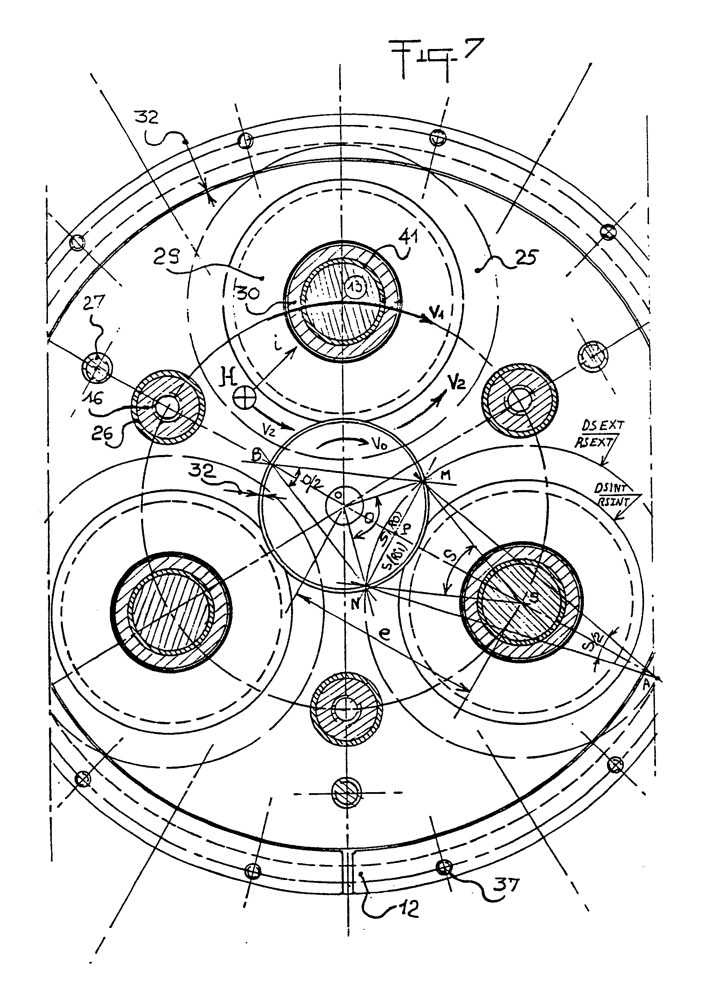

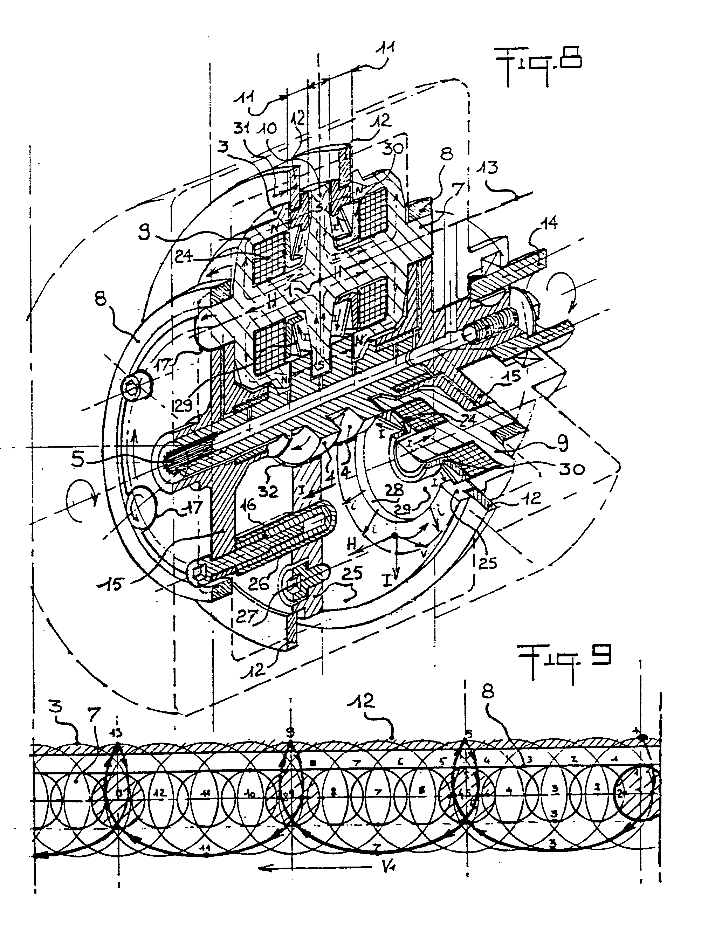

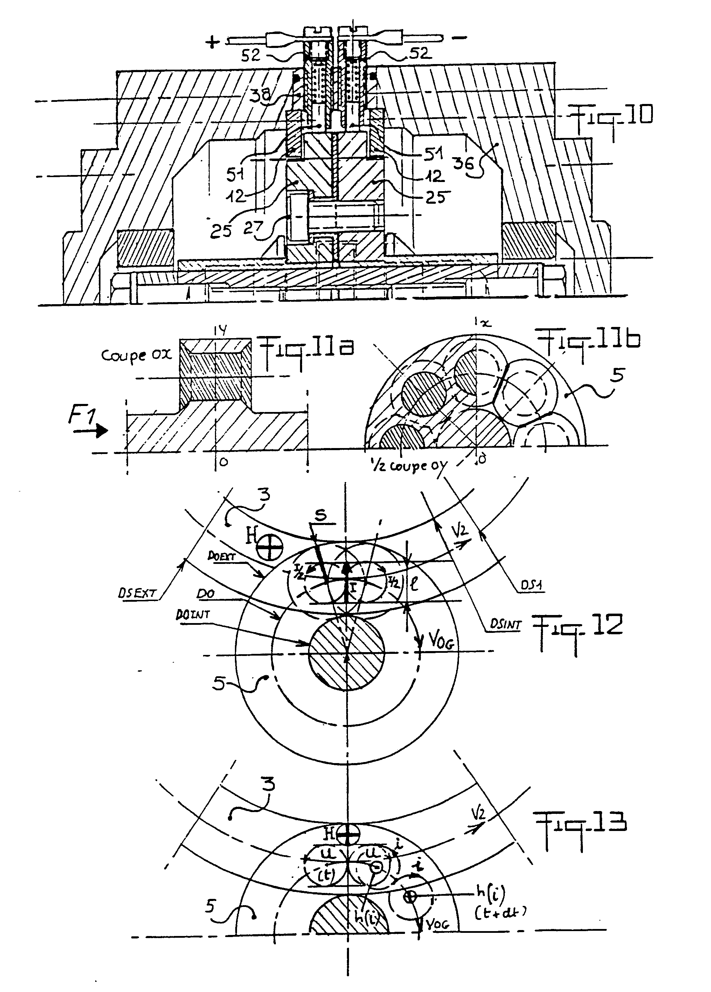

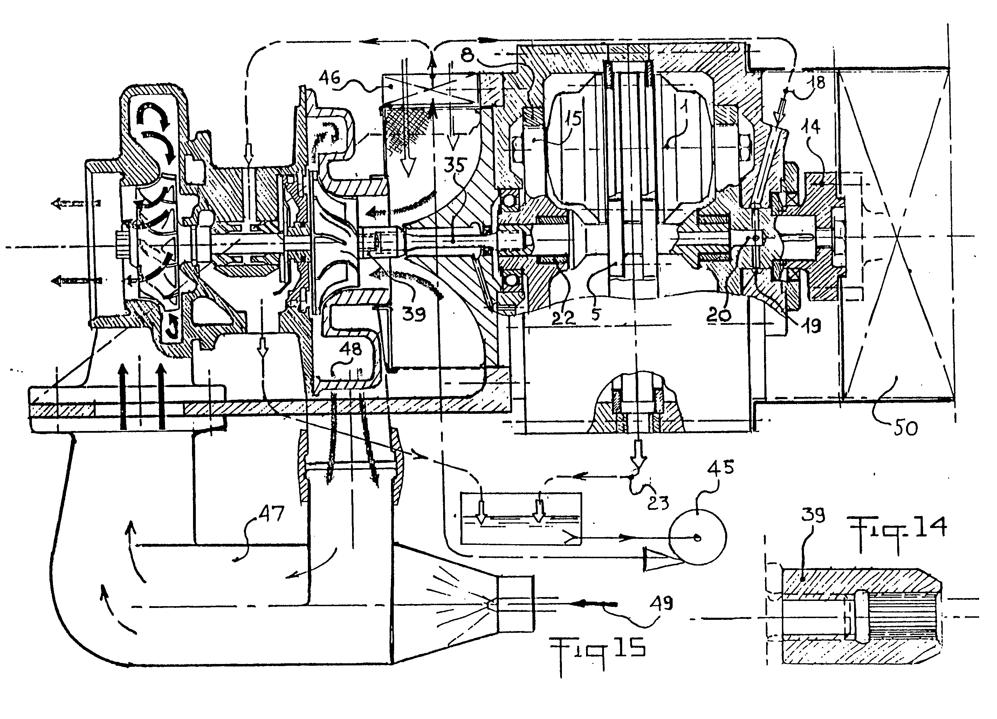

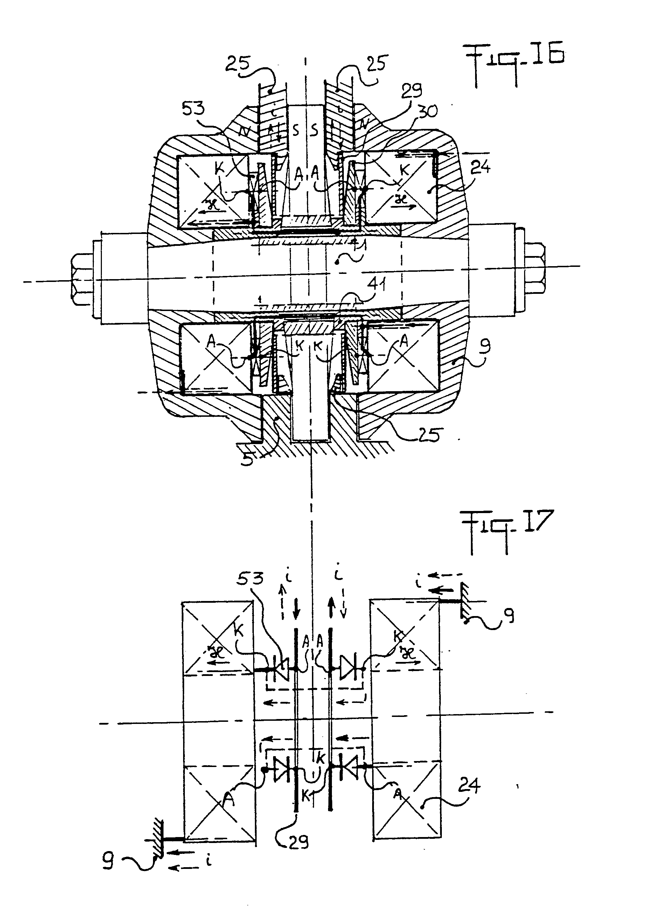

La disposition générale de principe (fig. 1, 2, 3) est celle d'un classique réducteur à train d'engrenage épicycloïdal, dont les différentes roues auraient perdu leur denture et seraient réduites à leur diamètre primitif. Etant à train épicycloïdal, ce réducteur comporte un certain nombre de satellites 1, caractérisés par deux circonférences primitives:

— l'une de grand diamètre 2 est contenue dans un disque appelé «joue polaire» 3. Elle est tangente au cercle primitif 4, porté par un collet du rotor-menant 5;

— l'autre 6, plus petite, correspond au diamètre extérieur du moyeu-porteur 7, par lequel le satellite s'appuie, à chacune de ses extrémités, sur une couronne concentrique au rotor-menant, appelée piste de roulement 8.

Ces moyeux 7 et pistes de roulement 8 sont les deux autres circonférences primitives qui avec celles tangentes 2 et 4 du satellite et du collet, déterminent le rapport de réduction théorique (produit des circonférences menées divisé par produit des circonférences menantes). Chaque satellite est constitué de deux carcasses identiques 9 en forme de cloche (fig. 4), adaptées sur un corps central comportant un disque médian 10. Ainsi, chacun d'eux comporte quatre faces ou joues polaires 3, solidaires du moyeu 7, séparées par deux intervalles 11 dans lesquels règne un champ magnétique, le disque 10 constituant un pôle commun. Les joues ont donc successivement une polarité magnétique nord/sud-sud/nord ou inversement, le champ magnétique étant uniformément réparti sur ces surfaces. Chacun des deux intervalles 1 entre les joues polaires 3 est partiellement occupé par un des deux collets 5 du rotor-menant qui se trouvent ainsi localement traversés dans le sens axial par le champ magnétique.

La rotation rapide du rotor dans cet entrefer développe, dans le métal des collets 5, des courants induits.

Conformément aux lois du magnétisme, ces courants s'opposent à la cause leur ayant donné naissance qui est la rotation du rotor-menant. Ils réagissent donc sur le champ-inducteur pour l'entraîner avec eux. Ceci provoque la transmission de son mouvement de rotation aux satellites 1, tout comme s'il y avait engrènement, mais avec un nécessaire glissement relatif. Cette mise en rotation des satellites 1 sur eux-mêmes a pour conséquence d'obliger les moyeux 7 à rouler sur les pistes circulaires 8 concentriques au rotor-menant 5; l'axe des satellites 13 se trouve entraîné par le roulement sur les pistes 8 en un mouvement circulaire qui est capté et transmis à l'arbre de sortie 14 du réducteur par une autre pièce concentrique, la cage porte-satellites. Cette cage est constituée par deux flasques 15 reliés entre eux par des entretoises 16 passant par les espaces libres restant entre les satellites. L'un de ces flasques est solidaire de l'arbre de sortie 14 et lui transmet le mouvement de l'ensemble. Chacun des flasques est situé dans le plan contenant une des deux pistes de roulement 8 et comporte des encoches radiales 17 (fig. 6), en forme de U ouvert vers l'extérieur, face à la piste. Ces encoches reçoivent les moyeux porteurs 7 des satellites qui, en s'appuyant sur la face correspondant au sens de la rotation, transmettent l'effort tangentiel du couple de sortie aux prix d'une certaine friction, comme ce serait le cas dans un palier. Mais ici, ce palier, étant ouvert à la périphérie, est soustrait à l'effort très important dû à la force centrifuge s'exerçant sur chacun des satellites. En effet le poids de ces derniers s'exerçant sur les moyeux-porteurs 7 est totalement supporté par les deux pistes de roulement 8.

La force centrifuge applique donc les moyeux 7 sur ces chemins de roulement 8 proportionnellement au rayon de la piste, au carré de la vitesse angulaire et à la masse du satellite. C'est à dire que cet effort est considérable et que, même pour des vitesses relativement faibles, ce roulement, fortement appuyé, se fait sans aucun déplacement relatif des surfaces en contact. Ici encore, tout se passe comme s'il y avait engrènement mais cette fois sans aucun glissement.

Cependant, lors du démarrage (donc bien avant que la force centrifuge s'exerce efficacement), un effet d'induction analogue à celui se manifestant au centre dans le rotor-menant 5 est organisé à la périphérie de l'appareil. Mais il se manifeste cette fois dans deux autres couronnes périphériques fixes 12 qui occupent partiellement l'intervalle 11 entre les joues polaires 3 à l'opposé, diamétralement, du collet du rotor-menant 5. Ces couronnes fixes 12 ont pour but d'éviter le patinage qui pourrait se produire lors de la mise en mouvement du satellite 1 sur la piste de roulement 8. En effet, dès que les joues polaires 3 commencent à tourner des courants induits naissent dans ces couronnes 12 tendant à s'opposer à cette rotation. Il en résulte encore un effet d'engrènement favorisant le démarrage de l'ensemble. Or, justement cette action électromagnétique n'a son efficacité maximum que s'il y a patinage sur les pistes 8. Ceci est dû au fait que la trajectoire d'un point quelconque porté par la circonférence primitive de la joue 3 et par lequel passe une ligne de force du champ magnétique change de forme dès que le satellite 1 se met à rouler. S'il ne roule pas (donc patine) la trajectoire est un cercle. Le courant induit est alors de direction radiale et de ce fait réagit sur le champ (de direction axiale), par une force tangentielle opposée à la rotation d'ou l'effet d'engrènement recherché.

Mais dès qu'il commence à rouler, la trajectoire du point considéré, porteur d'une ligne de force, devient une épicycloïde (tracé développé fig. 9). La ligne de force n'est alors coupée par la couronne 12 que dans les portions de trajectoire initiales et finales des épicycloïdes successives, selon des directions quasi radiales. Il s'ensuit que le courant induit passe progressivement d'une direction radiale au départ à une direction tangentielle et que l'effet d'engrènement tend à disparaître. Cependant il subsiste toujours deux petites composantes tangentielles de sens contraire au voisinage du point de rebroussement, qui s'annulent seulement en l'absence de patinage et avec un décalage dans le temps. L'effet d'engrènement reste donc potentiellement présent et se renforce instantanément au moindre déséquilibre. Mais il y a aussi un effet radial défavorable analogue à l'obstruction des creux de dents d'un engrenage par une matière visqueuse, s'opposant successivement à la pénétration de la dent puis à son retrait. On limite cette perte à une valeur très faible en choisissant un diamètre intérieur de ces couronnes 12 juste suffisant pour que le démarrage se fasse sans patinage, mais tel que la petite composante tangentielle ne se trouve pas trop réduite. C'est pourquoi, sur le dessin, chaque couronne 12 n'intéresse que la moitié de la largeur de la joue polaire 3. Ainsi l'effet mécanique de roulement n'est pas seul à assurer la transmission du couple. Il est assisté par une denture magnétique latente.

Une lubrification des paliers en U recevant les moyeux-porteurs des satellites est nécessaire. En fait, ces logements 17 bénéficient de celle organisée pour les moyeux-porteurs et pistes de roulement. En effet, bien que ne devant pas patiner et étant prévus en acier spécial cémenté traité, leur cas est analogue à celui de roulements à rouleaux cylindriques fortement chargés qui doivent être abondamment graissés. Mais qu'il s'agisse des logements 17 des moyeux-porteurs 7 ou des pistes 8, l'organisation de cette lubrification ne pose pas de problème, la force centrifuge étant mise à profit pour propulser le lubrifiant depuis le canal central 20. Ce canal est alimenté à partir du conduit de refoulement 18 d'une pompe de graissage et refroidissement 45 (fig. 15) par un distributeur 19 tournant à la vitesse réduite de l'arbre de sortie 14. A ce régime relativement modéré, une pression de l'ordre de quelques bars suffit pour vaincre la force centrifuge s'opposant à la pénétration du lubrifiant vers le centre (ce qui ne serait pas le cas si ce distributeur était sur le rotor-menant, tournant à très grande vitesse). Le lubrifiant étant donc introduit selon l'axe du canal 20 inclus dans le rotor-menant 5, celui-ci agit alors comme une pompe centrifuge forçant le lubrifiant à travers des canaux radiaux vers les conduits 21 et les paliers 22.

En fin de circuit, le lubrifiant est collecté au point bas de l'enveloppe en trois parties 36 et 38 par le conduit 23 de reprise de la pompe de graissage et refroidissement. En effet, outre son rôle de graissage, le lubrifiant sert à évacuer la chaleur produite par les pertes joule, d'autant plus importantes que le glissement est élevé. C'est pourquoi un fort débit peut être nécessaire et que la section du canal 20 doit être généreuse. Des conduits radiaux sont d'ailleurs prévus au droit des collets 5 et au milieu du rotor pour favoriser ce refroidissement et, de plus, limiter les conséquences de frottement accidentels des pièces en rotation. Cette chaleur peut être dissipée dans un radiateur 46.

Le distributeur tournant 19 peut constituer, en raison des faibles jeux qu'il exige, le palier-support et de butée pour le flasque 15 de sortie, donc être le palier-juste de l'ensemble, à partir duquel s'effectuent les dilatations. Le roulement portant l'arbre de sortie 14 est donc facultatif. A l'extrémité côté entrée de puissance ce canal est obturé par l'embout coulissant de l'arbre 35 d'accouplement avec la turbine. La fuite de lubrifiant par les cannalures assure à la fois leur graissage et celui de l'autre roulement.

La vitesse de rotation propre des satellites sur eux-mêmes est élevée. Elle dépend de la vitesse de sortie choisie, ainsi que des diamètres respectifs de la couronne de roulement et du moyeu-porteur. Elle peut se situer, selon les cas, entre un quart à un tiers de la vitesse d'entrée, soit vers 15 à 20 000 t/min.

Bien que sévères, ces conditions de travail sont celles des galets des roulements à rouleaux cylindriques graissés à l'huile, donc dans le domaine de la pratique industrielle courante. Toutefois, il y a intérêt autant que possible à les dimensionner largement et à réduire leur charge radiale, donc la masse des satellites en évitant de trop grands diamètres et limitant au strict nécessaire les sections de fer du circuit magnétique. L'utilisation de fil d'aluminium pour les bobines inductrices peut ainsi s'imposer.

Le champ magnétique peut être obtenu par des aimants permanents ou par des bobines inductrices, les uns ou les autres étant logés dans la carcasse 9 à l'emplacement 24.

Dans le cas de bobines, le système est à auto-excitation. Chaque satellite reçoit deux bobines 24, parcourues par un courant inducteur engendré par la rotation des satellites sur eux-mêmes. Initialement, le champ est dû au magnétisme rémanent conservé par le métal magnétique des satellites, renforcé au besoin par des aimants permanents annulaires 40 logés sur l'axe 13. L'existence de ce magnétisme initial est nécessaire à l'amorçage et pour éviter le patinage au démarrage, grâce aux courants induits dans les couronnes 12. Dès que les satellites se mettent à tourner sur eux-mêmes entraînant ce champ en rotation, des courants induits se développent dans deux couronnes génératrices 25 placés chacune entre les joues des satellites dans l'intervalle 11 de même largeur que celui enserrant le rotor-menant 5.

Pour le moment, considérons ces deux couronnes génératrices 25 serrées l'une sur l'autre par les vis 27, donc électriquement en court-circuit (un montage électriquement isolé sera envisagé plus loin). Elles sont portés et entraînées en rotation par les entretoises 16 et des douilles isolantes 26 afin d'être électriquement isolées du restant de l'appareil.

Elles sont traversées par les moyeux 7 grâce aux alvéoles circulaires 28 occupées par une rondelle élastique 29 en métal non magnétique afin de ne pas constituer une dérivation du champ. Cette rondelle élastique s'appuie sur une bague 30, isolée par le système de serrage 41 qui maintient la bobine 24 en place. Cet ensemble relie donc électriquement toutes les bagues 30 des satellites, étant de plus entraînée par eux exactement comme l'est la cage porte-satellite 15. Il s'ensuit qu'à la différence des couronnes périphériques fixes 12, ces couronnes génératrices 25 coupent toujours les lignes de force du champ magnétique selon un cercle. En conséquence, les courants induits sont, dans toute la zone circulaire balayée, de direction radiale. Ils convergent vers la circonférence de contact entre rondelle élastique 29 et bague 30 ou en divergent selon le sens du champ. Comme dans les intervalles 11, les polarités magnétiques sont inversées, le sens de ces courants radiaux sont contraires d'un côté à l'autre. Il se crée donc, pour un régime de rotation donné, une différence de potentiel constante entre les deux bagues 30 d'un même satellite. Or ces bagues sont électriquement isolées à la fois des carcasses 9 et du moyeu central 13. Cette tension continue peut donc être appliquée aux bobines 24 en connectant ces bagues à leur fil d'entrée, ce circuit en série se fermant dans le moyeu par mise à la masse des fils de sortie ainsi que par le contact métal sur métal des deux couronnes 25 serrées par les vis de liaison 27.

Le nombre de satellites peut être de deux, trois ou quatre, ce dernier nombre étant un maximum pratique qui dépend de considérations géométriques et de construction. En effet, l'obtention d'un rapport de réduction élevé implique qu'ils aient un assez grand diamètre par rapport au rotor-menant 5. Au-delà de deux diamétralement opposés la configuration donnant le plus grand diamètre de satellite et le plus petit diamètre du rotor est celle groupant trois satellites disposés à 120°.

Cette dernière disposition, retenue dans cette description, est celle qui convient lorsque la prise de mouvement sur la turbine motrice peut se faire en bout d'arbre et que, de ce fait le choix du diamètre du rotor-menant est totalement libre, donc aussi petit que voulu ou nécessaire. Celle qui en groupe quatre donne, dans un même cercle circonscrit, un diamètre de satellite un peu moins grand avec un diamètre de rotor nettement plus important, donc un rapport de réduction moins intéressant. Cependant, cette disposition peut s'imposer lorsque le diamètre du rotor-menant dépend de celui de l'arbre qui le porte et que, de ce fait, il ne peut pas être suffisamment réduit. L'emploi de trois satellites pourrait alors conduire à un encombrement prohibitif et à une masse de chacun excessive. Mais la capacité de transmission de couple étant alors plus élevée qu'avec trois la même puissance peut être obtenue avec un glissement moindre, donc avec un bien meilleur rendement.

Il est alors admissible de recourir si nécessaire à un second étage de réduction constitué par des engrenages classiques, le rendement final restant acceptable (produit des R).

En principe, le métal utilisé par la mise en œuvre du rotor-menant 5 des couronnes périphériques 12 peut être magnétique ou non. On peut aussi envisager une construction mixte incorporant dans un métal tel que l'aluminium des noyaux de fer régulièrement espacés d'une manière inversement analogue au rotor cage d'écureuil d'un moteur asynchrone (fig. 11).

S'il n'est pas magnétique, la réluctance qu'il oppose dans l'intervalle (11) représente la quasi-totalité de celle du circuit magnétique. Or cette réluctance croît comme la largeur de cet intervalle, donc comme l'épaisseur du collet 5 qui est aussi celle des couronnes 12 et 25. Ces pièces devront donc être très minces. Mais malgré cette précaution (à moins d'utiliser des aimants très puissants ou de très grosses bobines parcourues par un fort courant inducteur), le champ régnant dans l'intervalle 11 et traversant le collet 5 du rotor-menant, ne pourra y induire que des courants faibles dont la force de réaction sur ce champ faible ne peut engendrer qu'un effort tangentiel très modeste.

Si, au contraire, on emploi un métal magnétique (construction massive ou mixte), on bénéficie de la concentration du champ magnétique dû à l'effet de sa perméabilité et les valeurs atteintes par ces forces électromagnétiques sont considérablement accrues. De plus, la limitation d'épaisseur du collet 5 et des couronnes 12 et 25 ne s'impose plus autant.

Par contre le jeu d'entrefer 31, nécessaire pour permettre la rotation des joues polaires sans frottement sur les collets 5, et les couronnes 12 et 25, devra être aussi réduit que possible en raison de sa réluctance non-négligeable et pour limiter le flux de fuite. Une autre précaution indispensable consiste à éviter des variations de flux magnétique au cours de la rotation des satellites, susceptibles d'engendrer des pertes par courants de Foucault.

Ce risque n'existe pas lorsque le métal utilisé est non magnétique parce que la perméabilité du milieu coupant les lignes de force au cours de la rotation est invariablement égale à 1 (valeur pour le vide, air et matériaux non magnétiques).

Il peut en être de même avec un métal magnétique, mais à la condition qu'il n'y ait pas, au cours de la rotation, de changement de la perméabilité du milieu traversé par les lignes de force. Sinon une construction feuilletée (coûteuse et fragile) de la carcasse des satellites serait nécessaire. Ce feuilletage est donc évité en réduisant le plus possible les espaces vides dans la zone balayée au cours de la rotation. C'est pourquoi, avec par exemple une construction massive fer ou acier doux, le jeu 32, nécessaire entre la périphérie du collet 5, l'alésage central des couronnes génératrices 25 et les couronnes fixes 12 qui lui sont concentriques, doit être aussi faible que possible. Ceci afin que les lignes de force du champ, en tournant, n'aient pas à traverser une trop large zone vide où la perméabilité chutant d'une valeur élevée à seulement 1, entraînerait une variation de flux, donc des pertes par courants de Foucault.

Si les couronnes 25 sont en métal non magnétique, le circuit magnétique s'en trouve sensiblement modifié. Il cesse d'être uniformément réparti car le flux magnétique se concentre selon le plan diamétral fixe du satellite contenant les collets du rotor-menant 5 et les couronnes fixes 12, c'est-à-dire selon les zones de haute perméabilité du circuit (là où se trouve du métal magétique dans l'entrefer). Dans ces conditions, la rotation rapide du métal constituant les cloches 9 dans ce champ qui se maintient dans un plan fixe y induirait des courants qui, se bouclant dans la masse, engendreraient des pertes importantes. Or, si l'on isole électriquement de leur moyeu chacune des cloches 9 et qu'à la périphérie interne de ces dernières, on capte ces courants induits de direction radiale, il se crée une différence de potentiel continue (compte tenu de l'inversion des polarités) exactement comme précédemment décrit pour les couronnes génératrices 25. Ainsi, les bobines inductrices peuvent être alimentées de la même manière mais cette fois sans qu'aucun contact tournant ne soit nécessaire, le circuit électrique se fermant d'une bobine 24 à l'autre par le moyeu 7 isolé dans le satellite lui-même. Ce mode de construction est donc très intéressant puisqu'il permet de supprimer les contacts électriques tournants par bagues 30 et rondelles élastiques 29. Ces contacts tournants peuvent néanmoins être conservés pour l'alimentation des bobines par une source de courant continu extérieure, soit en appoint, soit pour l'amorçage initial. La disposition générale est inchangée, la seule différence étant la nature du métal des couronnes 25 qui servent alors seulement du conducteur depuis les balais 51. Si nécessaire, le flux magnétique intéressant les couronnes fixes 12 peut être renforcé et canalisé au moyen d'un ou plusieurs noyaux de fer-doux localement insérés en face d'elles dans lesdites couronnes 25 non magnétiques (construction mixte).

Si l'on envisage cette construction mixte, notamment pour le rotor-menant 5, les noyaux de fer ou d'acier-doux ne devront pas être trop espacés. La solution consiste à utiliser des rivets en acier-doux à large tête fraisée dont les épanouissements après matage sont franchement jointifs (fig. 11).

Lorsque les collets 5 du rotor-menant ainsi que les couronnes génératrices 12 sont en métal magnétique, ces pièces subissent l'attraction des satellites et, à défaut de butée de positionnement, il y aurait fatalement contact mécanique d'un côté ou de l'autre. Pour éviter cela et maintenant des jeux d'entrefer égaux entre ces pièces, le rotor-menant comporte deux collets 33 pouvant s'appuyer, avec un léger jeu, sur l'une ou l'autre des faces extérieures du logement des paliers 22 portés par les flasques 15. Quant auxdits flasques 15 dont l'écartement est déterminé par la longueur donnée aux entretoises 16, ils positionnent les satellites par appui sur l'une ou l'autre des faces 34 des carcasses 9 avec le jeu juste suffisant. En ce qui concerne les couronnes génératrices 25, leur écartement est maintenu par rapport aux flasques 15 par les douilles isolantes 26 ajustées à la longueur voulue. De plus, les rondelles élastiques 29 participent au maintien de l'entrefer en écartant les carcasses 9 des couronnes 25 dont les côtes d'épaisseur assurent le jeu voulu avec les disques 10. Il y a évidemment intérêt à égaliser tous ces entrefers pour équilibrer les attractions magnétiques et soulager les butées. Mais il faut compter avec les dilatations. Elles s'effectuent de part et d'autre du plan médian central afin de minimiser leur influence sur ces jeux, l'ensemble étant positionné par le palier-juste 19.

Le rotor-menant peut faire partie intégrante de l'arbre de la turbine ou bien y être accouplé (fig. 14 et 15).

C'est le cas notamment pour la prise de mouvement en bout d'arbre de compresseur d'une turbo-soufflante, tel l'exemple choisi pour la présente description. Comme le coupleur-réducteur doit alors se trouver à une certaine distance de l'ouïe d'aspiration du compresseur pour ne pas le gêner, l'accouplement se fait au moyen d'un arbre 35 de petit diamètre et de la longueur voulue, travaillant en torsion élastique, cannelé à ses deux extrémités (liaison coulissante). La prise de mouvement sur l'arbre de turbine se fait par un écrou spécial 39 prolongé par des cannelures, se substituant à l'écrou d'origine bloquant la roue du compresseur. Le rotor-menant, également cannelé, reçoit l'autre extrémité 35.

Ainsi le rotor-menant étant supporté par ses propres paliers et butées tels que précédemment décrits n'influence en rien l'arbre de la turbine sinon par le léger poids supplémentaire s'exerçant sur l'écrou d'une des extrémités de l'arbre 35.

Par sécurité, il est bon de lancer les turbines à gaz pour que leur compresseur ait commencé de débiter lors de l'allumage, ventilant préalablement les chambres de combustion.

Cette fonction peut être assurée par ce coupleur-réducteur en application de la réversibilité des machines électriques. Pour cela on évite de relier électriquement les deux couronnes génératrices 25 en les isolant l'une de l'autre (y compris les liaisons par vis 27). Dans ces conditions, on peut adapter sur la couronne intercalaire 38 des balais 51 à support isolant 52, frottant sur la périphérie des deux couronnes génératrices. Ces balais étant reliés entre eux, donc en court-circuit, permettent alors le fonctionnement du coupleur-réducteur auto-excité comme auparavant. Mais si l'on déconnecte ce court-circuit, apparaît la possibilité de débiter dans les bobines inductrices à partir d'une source de courant continu extérieure. Il faut cependant s'arranger pour conserver le même sens de rotation en moteur qu'en coupleur-réducteur. D'où l'incorporation dans chaque satellite d'un pont de redressement à quatre diodes 53 (fig. 16 et 17), afin de maintenir la même polarité magnétique aux satellites alors que le sens du courant dans les couronnes génératrices est nécessairement inversé (sens moteur). Il est alors évident qu'il n'y a plus besoin d'aimants d'amorçage, ce courant extérieur assurant l'aimantation initiale, relayé ensuite par l'auto-excitation dès qu'il est coupé et que les couronnes sont remises en court-circuit.

L'aimantation ainsi créée réagit sur ce courant d'alimentation à sa traversée radiale des couronnes génératrices et engendre un couple proportionnel à leurs intensités respectives. Si sa valeur est suffisante pour vaincre les résistances passives et mettre en rotation les satellites, il en résulte l'entraînement de la cage porte-satellites, de l'arbre de sortie et de la machine réceptrice. Ce mouvement des satellites engendre alors des courants induits dans le rotor-menant qui tendent à l'entraîner en rotation par leur réaction sur le champ.

Mais le couple s'exerçant sur le rotor est très faible. Aussi, la mise en rotation de l'ensemble mobile turbine et compresseur ne peut être obtenue que si leur résistance passive est minime, le travail à produire par le compresseur étant considéré, du moins initialement, comme négligeable.

Or, tant que le rotor reste immobile, le glissement relatif est maximum et demeure important durant tout le démarrage. De sorte que les courants induits dans le rotor-menant peuvent atteindre des intensités dangereuses si sa mise en rotation tarde trop (d'autant que, comme on l'a vu, courant inducteur et champ doivent être très forts par parvenir à lancer les satellites).

C'est pourquoi, afin d'éviter en échauffement excessif, la pompe de lubrification et de refroidissement 45 devra préalablement débiter. Une moto-pompe électrique indépendante alimentée par la même source de courant, donc débitant dès l'établissement du courant de démarrage, paraît préférable à une pompe attelée nécessairement placée sur l'arbre de sortie qui est le premier à tourner. En effet, cette dernière solution est au prix d'un accroissement du couple à développer initialement par les satellites qui peut être prohibitif.

En fait, l'exigence de très faibles jeux d'entrefer s'atténue avec l'augmentation des dimensions générales. Le calcul pour une machine de dimensions multipliées par 1,5 montre, alors que la capacité théorique de transmission de puissance se révèle multipliée par 7 dans les mêmes conditions d'emploi, que le jeu «&» peut atteindre 0,25 mm, soit 2,5 à 5 fois plus.

Les pièces étant réalisées aux côtes voulues avec la précision requise, leur positionnement relatif (donc les jeux), est fixé par l'écartement des flasques 15 et couronnes génératrices 25 donné par les entretoises 16 et bagues isolantes 26. Ainsi les dilatations s'effectuent symétriquement de part et d'autre du plan médian contenant le voile 10. Les jeux de construction sont donc très faiblement influencés par ce facteur, à condition toutefois que le rotor-menant soit convenablement refroidi et que, justement, le lubrifiant qui le traverse limite son allongement, homogénéisant de plus la température de l'ensemble.

Par contre, les jeux initiaux entre couronnes extérieures 12, voiles 10 et joues polaires 3 sont fixés par le palier-distributeur 19 situé en bout de l'appareil. Ils peuvent donc être sensiblement modifiés à chaud par le cumul des dilatations et leur valeur à froid devra en tenir compte. Mais comme l'effet d'engrènement extérieur est un peu accessoire et qu'on cherche à limiter son effet secondaire parasite, il n'y a pas d'inconvénient à adopter là les jeux légèrement plus élevés, d'autant qu'ils influent peu sur la consommation de FMM.

Revenant au jeu entre rotor-menant 5 et joues 3, il faut remarquer qu'un éventuel contact entre ces faces en rotation ne serait vraiment défavorable qu'au démarrage ou, en fonctionnement normal, à défaut de lubrification et avec un assez forte poussée axiale. En effet, le déplacement relatif de ces surfaces correspond au glissement, donc à des vitesses très voisines et de même sens. De même, sur les couronnes extérieures 12, la fig. 9 montre que le déplacement relatif réel dans les zones de contact possible se fait à la vitesse la plus faible des trajectoires épicycloïdales puisqu'au voisinage du point de rebroussement. De plus, en phénomène d'auto-centrage magnétique (fig. 13) dû aux grandes vitesses de rotation se manifeste, notamment pour le rotor-menant 5.

En effet, les courants induits dans les collets y circulent selon deux boucles. Chaque boucle engendre un champ magnétique dont le sens est déterminé par celui du courant. Dans l'une des boucles, ce sens est le même que celui du champ inducteur, dans l'autre il y est opposé puisque le sens de rotation de ces deux courants est inverse. Donc, au point de tangence des deux boucles, ces deux champs égaux et de sens contraire s'annulent et n'ont aucun effet sur le champ inducteur. Mais à très grande vitesse, il se produit un décalage dans le temps entre la création de la tension induite et l'établissement de l'intensité du courant induit. Il s'ensuit que si les deux boucles correspondant à la tension sont toujours au point initial de tangence entre les circonférences D0 et DS1, les deux boucles correspondant au courant réel tendent à se situer en retard du mouvement (fig. 13). Compte tenu des sens respectifs du champ inducteur, du mouvement et des courants, il apparaît que la boucle, dont le champ est de sens contraire au champ inducteur, tend à venir en face de ce dernier et à s'y opposer alors que l'autre sort de la zone d'action. Ainsi se crée un effet de répulsion entre les joues 3 et collets 5 conduisant à un auto-centrage qui se substitue à l'action des butées 33 ou, en tout cas, les soulage d'autant. A un bien moindre degré, ce phénomène très connu appelé aussi «sustentation magnétique», utilisé dans beaucoup de machines électriques, peut s'exercer entre ces mêmes joues 3 et les couronnes extérieures 12. Mais il présente ici moins d'intérêt puisque les jeux y sont plus importants à cause du cumul des dilatations et que le positionnement des joues est acquis.

Malheureusement, on ne peut pas bénéficier du tout de ce phénomène pour des couronnes génératrices en métal magnétique 25 parce que l'on n'y laisse pas les courants induits se boucler. Aussi, en ce cas, le risque de friction est sérieux entre les pôles 3, 10 des satellites et les couronnes génératrices 25, la vitesse relative V2 étant très élevée.

En effet, l'attraction magnétique s'exerçant sur la surface génératrice du courant inducteur, peut devenir très importante si les jeux d'entrefer ou les champs magnétiques ne sont pas égaux (condition d'équilibre). A cette vitesse tout contact produirait des dommages et bloquerait la machine. Ainsi, les douilles isolantes 26 portées par les entretoises 16 sont d'une importance capitale, de même que le rôle des surfaces de butée 34 entre flasque 15 et carcasses 9. Mais les rondelles élastiques 29, en appui comprimé sur les couronnes 25 et sur les bagues 30 ont également ce rôle. Sous réserve d'une surface d'appui et d'une lubrification convenables, ce double système collecteur de courant constitue un autre positionneur du satellite par rapport aux couronnes 25. Or, justement le lubrifiant issu du canal 20 à la base du collet 5 aboutit directement sur la surface de friction entre rondelle 29 et bague 30, toutes les faces polaires étant d'ailleurs abondamment arrosées.

Tous ces éléments de calcul précédemment fournis permettent l'estimation des performances électriques théoriques de l'appareil. Il en est donné résultat pour un modèle d'une taille voisine de celle du dessin de la fig. 4, sous forme de graphique (fig. 18).

L'application serait un turbo-alternateur à vitesse régulée constante VI = 3000 t/mn mû par une turbine fonctionnant entre 46500 et 50000 t/mn.

Le calcul donne un rendement global théorique dont la courbe ressemble à celle d'un moteur asynchrone, avec un maximum autour de 95%. Pour des glissements plus importants, la courbe de rendement R2 a une décroissance relativement modérée telle qu'à 50000 t/mn, il est encore de 87% pour une puissance décuplée. Ces performances sont équivalentes en rendement aux transmissions électriques existantes ou aux coupleurs hydrauliques. Mais comme aucun de ces systèmes ne convient aux vitesses considérées, n'étant pas non plus capables d'un degré de réduction comparable en un seul étage (ici, 1/15,8), l'intérêt de l'invention ouvrant la voie à l'utilisation de turbines compactes à très haut régime est bien confirmé.

## Revendications

1. Coupleur-réducteur à induction pour machines à très grande vitesse de rotation utilisant en lieu et place des dentures d'engrenages du classique réducteur mécanique à train épicycloïdal dont il est issu, des effets électromagnétiques d'induction et mécaniques de roulement et comportant un rotor-menant (5) et un rotor-mené (14) par l'intermédiaire de satellites (1) porteurs d'un champ magnétique y engendrant des courants induits qui, par réaction sur ce champ inducteur, provoquent avec un certain glissement l'entraînement en rotation des satellites (1), caractérisé en ce que le rotor-menant comporte au moins un collet (5) coopérant avec lesdits satellites (1), lesquels sont contraints de rouler sans patiner sur des pistes circulaires (8) concentriques au rotor-menant par l'intermédiaire de leurs moyeux-porteurs (7), ceux-ci y étant appliqués par la force centrifuge; ce mouvement résultant étant capté par les flasques (15) d'une cage porte-satellites (1) est transmis à l'arbre de sortie (14) dont elle est solidaire, réalisant ainsi la réduction de vitesse selon un rapport réel égal au rapport théorique majoré du glissement nécessaire et admis.

2. Coupleur-réducteur selon la revendication 1, caractérisé en ce qu'il comporte au moins une couronne périphérique fixe (12), placée dans l'entrefer (11) des satellites de manière à être, elle aussi, le siège de courants induits s'opposant à la rotation des satellites en cas de patinage des moyeux (7) sur les pistes (8), constituant ainsi une denture magnétique latente assistant éventuellement l'effet mécanique de roulement dans la transmission du couple capté.

3. Coupleur-réducteur selon l'une quelconque des revendications 1 et 2, caractérisé en ce que lesdits satellites sont constitués d'un corps axial (13) à deux moyeux-porteurs (7) avec voile central (10) constituant le pôle commun à deux circuits magnétiques distincts; ces deux circuits se composent chacun d'une carcasse en forme de cloche (9) solidaire du corps axial (13), serrée par l'intermédiaire d'un bague de roulement rapportée (42), recevant dans un logement (24) soit un aimant permanent annulaire, soit une bobine inductrice, éventuellement sur l'axe de rotation (13) un aimant permanent annulaire d'appoint (40) ces deux circuits magnétiques se fermant d'une part sur les collets (5) du rotor-menant, d'autre part sur une couronne-génératrice (25), lesdits collets (5) et couronne-génératrice (25) étant en métal magnétique ou non, ou rendu magnétique par insertion de noyaux ferreux dans les zones traversées par le champ.

4. Coupleur-réducteur selon l'une quelconque des revendications 1, 2 et 3, caractérisé en ce que lesdits satellites (1) ont comme source du champ magnétique des bobines inductrices dont le courant continu d'excitation est fourni par la machine elle-même, ce courant provenant de la tension continu induite engendrée par la rotation des satellites sur eux-mêmes dans leur propre carcasse magnétique ou cloche (9), la tension continue résultant du mouvement relativ au sein des cloches (9) du champ magnétique maintenu malgré leur rotation dans le plan fixe contenant les collets (5) du rotor-menant, par l'effet de perméabilité de leur métal constituant le courant électrique s'établissant depuis les cloches (9) électriquement isolées de leur noyau (7) à travers les bobines (24), cette disposition évitant un système de contact tournant.

5. Coupleur-réducteur selon l'une quelconque des revendications 1, 2 et 3, caractérisé en ce que lesdits satellites (1) ont comme source du champ magnétique des bobines inductrices dont le courant continu d'excitation est fourni par la machine elle-même, ce courant provenant de la tension continue induite engendrée par la rotation des satellites sur eux-mêmes, dans deux couronnes génératrices (25), la tension continue induite est engendrée par la rotation du champ uniformément réparti entre les joues polaires (3) et (10) s'exerçant dans les couronnes génératrices (25), le courant étant collecté à l'aide d'un système à contact tournant constitué par des rondelles élastiques (29) en métal non magnétique s'appuyant sur des bagues isolées (30) connectées à l'un des fils + ou − des bobines, l'autre étant à la masse, fermant le circuit.

6. Coupleur-réducteur selon l'une quelconque des revendications 1 à 5, caractérisé en ce que les deux couronnes (25) portées par les entretoises (16), électriquement isolées de la masse par les douilles (26) en entraînées en rotation avec la cage porte-satellite à la vitesse réduite de l'arbre de sortie (14), sont, en fonctionnement normal en court-circuit, soit par leur appui mutuel, soit au moyen de balais extérieurs commutables (51), lesdites couronnes (25) étant dans ce dernier cas, non pas en contact mais isolées entre-elles, lesdits balais (51) frottant à leur périphérie permettent l'alimentation des bobines par une source extérieure de courant continu, ce qui, en vertu de la réversibilité des machines électriques, autorise l'utilisation dudit coupleur-réducteur comme moteur de lancement.

7. Coupleur-réducteur selon l'une quelconque des revendications 1 à 3, caractérisé en ce que lesdits satellites (1) ont leurs moyeux porteurs (7) qui tourillonnent dans des encoches (17) ménagées dans les flasques (15), ouvertes vers la piste de roulement (8) afin que le palier ainsi constitué, tout en transmettant l'effort tangentiel du couple de sortie, soit soustrait à l'effort très important dû à la force centrifuge, totalement supporté par la couronne (8).

8. Coupleur-réducteur selon l'une quelconque des revendications 1, 2, 3 et 7, dont toutes les parties tournantes sont graissées et refroidies par circulation, au moyen d'une pompe (45), d'un fluide lubrifiant et réfrigérant, caractérisé en ce qu'il comporte un palier-distributeur (19) introduisant ledit fluide, grâce à des canaux radiaux aménagés dans le tourillon du flasque (15) situé du côté de l'arbre de sortie, dans un canal axial (20) foré dans le rotor-menant tournant à très grande vitesse, afin de mettre à profit la force centrifuge pour propulser le lubrifiant par des conduits radiaux, desservant ainsi sous forte pression et grand débit des paliers (22), butées (33), conduits (21), entrefers (11) et conduits (21) vers lesdits moyeux-porteurs (7) et les pistes de roulement (8).

9. Coupleur-réducteur selon l'une quelconque des revendications 1, 2, 3, 7 et 8, caractérisé en ce que ledit rotor-menant (5) est porté par deux paliers (22) aménagés chacun dans l'un des flasques (15) servant en outre d'appui aux deux collets de butée (33), ces paliers étant du type à bague lisse libre selon la technique employée dans les petites turbo-soufflantes de moteurs à combustion interne afin de pouvoir tourner aux mêmes vitesses qu'elles.

10. Coupleur-réducteur selon l'une quelconque des revendications 1 à 9, caractérisé en ce qu'il est accouplable à une mini ou micro-turbine au moyen d'un arbre de transmission (35) d'une relativement faible section aux extrémités cannelées avec écrou spécial de prise de force (39), constituant ainsi une transmission coulissante de très faible masse, de telle sorte que les efforts centrifuges et axiaux nuisibles, susceptibles de s'exercer sur les rotors de la turbine et du réducteur, sont limités à des valeurs admissibles.

11. Coupleur-réducteur selon l'une quelconque des revendications 1 à 10, dans une application à une turbo-soufflante de suralimentation pour moteur à combustion interne étant utilisée comme turbine-motrice à gaz, équipée de chambres de combustion avec brûleur recevant l'air débité par la soufflante, et le combustible liquide ou gazeux contrôlé par un régulateur, l'air fortement échauffé et mélangé aux gaz de combustion se détend dans la turbine, réalisant le cycle classique de la turbine à air chaud avec récupération de chaleur dont celle dégagée par effet joule dans ce coupleur-réducteur, auquel est adjoint, si nécessaire, un deuxième étage de réduction mécanique à engrenages placé à sa sortie, caractérisé en ce qu'il constitue, en tant que coupleur, le moyen de réaliser, à partir de ladite mini au micro-turbine, le moteur d'entraînement d'un quelconque récepteur:générateur électrique, propulseur à roue-motrice ou à hélice.

**Patentansprüche**

1. Reduziergetriebe-Induktionskupplung für Maschinen mit sehr hoher Rotationsgeschwindigkeit, bei welcher anstelle der Getriebeverzahnung eines klassischen mechanischen Reduziergetriebes mit Umlaufgetriebe, von dem sie abgeleitet ist, elektromagnetische Induktions- und mechanische Rollbewegungseffekte ausgenützt werden, umfassend einen Antriebsrotor (5) und einen Abtriebsrotor (14) unter Zwischenschaltung von Planetenrädern (1) als Träger eines Magnetfeldes, das dort Induktionsströme erzeugt, welche durch Reaktion auf dieses Induktionsfeld mit einem bestimmten Schlupf den Rotationsantrieb der Planetenräder (1) bewirken, dadurch gekennzeichnet, dass der Antriebsrotor mindestens einen Flansch (5) umfasst, der mit den Planetenrädern (1) zusammenwirkt, welche gezwungen sind, auf zum Antriebsrotor konzentrischen Kreisbahnen (8) ohne durchzudrehen mittels ihrer Trägernaben (7) zu rollen, wobei letztere unter der Zentrifugalkraft dort angedrückt werden; die resultierende und von den Scheiben (15) eines Planetenräder(1)-Trägerkäfigs aufgenommene Bewegung auf die Antriebswelle (14), mit dem er verbunden ist, übertragen wird, wodurch die Geschwindigkeitsreduktion nach einem realen Verhältnis, das gleich ist dem theoretischen, um den notwendigen und zugelassenen Schlupf erhöhten Verhältnis, realisiert wird.

2. Reduziergetriebekupplung nach Anspruch 1, dadurch gekennzeichnet, dass sie mindestens einen stationären peripheren Kranz (12) umfasst, welcher derart im Eisenspalt (11) der Planetenräder eingesetzt ist, dass auch er Sitz der Induktionsströme ist, die sich der Rotation der Planetenräder im Fall des Durchdrehens der Nabe (7) auf den Bahnen (8) entgegensetzen, wodurch eine latente magnetische Verzahnung gebildet wird, die gegebenenfalls die mechanische Wirkung der Rollbewegung bei der Übertragung des aufgenommenen Moments unterstützt.

3. Reduziergetriebekupplung nach einem der Ansprüche 1 und 2, dadurch gekennzeichnet, dass die Planetenräder durch einen axialen Körper (13) mit zwei Trägernaben (7) mit zentraler Abdeckung (10), die den gemeinsamen Pol für zwei separate Magnetkreise darstellen, gebildet sind; die beiden Kreise jeweils aus einem mit dem axialen Körper (13) verbundenen glockenförmigen Gehäuse (9) bestehen, das mittels eines aufgesteckten Rollrings (42) festgeklemmt ist und welches in einer Aufnahme (24) entweder einen ringförmigen Permanentmagneten oder eine Induktionsspule und gegebenenfalls an der Rotationsachse (13) einen ringförmigen Zusatz-Permanentmagneten (40) aufnimmt, wobei sich die beiden Magnetkreise einerseits über die Flansche (5) des Antriebsrotors und anderseits über einen Erzeugenden-Kranz (25) schliessen, welche Flansche (5) und welcher Erzeugenden-Kranz (25) aus magnetischem oder nichtmagnetischem Metall oder Metall, das durch Einsetzen von Eisenkernen in den vom Feld durchkreuzten Zonen magnetisch gemacht wurde, bestehen.

4. Reduziergetriebekupplung nach einem der Ansprüche 1, 2 und 3, dadurch gekennzeichnet, dass die Planetenräder (1) als Quelle für das Magnetfeld Induktionsspulen aufweisen, deren Erreger-Gleichstrom von der Maschine selbst geliefert wird, wobei dieser Strom von der induzierten Gleichspannung kommt, die durch Rotation der Planetenräder um sich selbst in ihrem eigenen Magnetgehäuse bzw. ihrer Glocke (9) erzeugt wird, wobei die Gleichspannung von der Relativbewegung des Magnetfeldes innerhalb der Glokken (9) resultiert, welches Magnetfeld aufrechterhalten wird trotz Rotation derselben in der stationären, die Flansche (5) des Antriebsrotors enthaltenden Ebene aufgrund der Durchlässigkeitswirkung ihres Metalls, das den sich ab den durch die Spulen (24) von ihrem Kern (7) elektrisch isolierten Glocken (9) einstellenden elektrischen Strom bildet, welche Anordnung ein Dreh-Kontaktsystem vermeidet.

5. Reduziergetriebekupplung nach einem der Ansprüche 1, 2 und 3, dadurch gekennzeichnet, dass die Planetenräder (1) als Quelle für das Magnetfeld Induktionsspulen aufweisen, deren Erreger-Gleichstrom von der Maschine selbst geliefert wird, wobei dieser Strom von der induzierten Gleichspannung kommt, die durch Rotation der Planetenräder um sich selbst in zwei Erzeugenden-Kränzen (25) erzeugt wird, die induzierte Gleichspannung durch Rotation des gleichmässig zwischen den sich in den Erzeugenden-Kränzen (25) auswirkenden Polplatten (3) und (10) verteilten Feldes erzeugt wird, welcher Strom mit Hilfe eines Dreh-Kontaktsystems, bestehend aus nachgiebigen Plättchen (29) aus nicht magnetischem Metall, aufgenommen wird, welch Plättchen an Isolierringen (30) anliegen, die mit einem der +- oder —Drähte der Spulen verbunden sind, wobei der andere an Masse gelegt ist und so den Kreis schliesst.

6. Reduziergetriebekupplung nach einem der Ansprüche 1 bis 5, dadurch gekennzeichnet, dass die beiden Kränze (25), die von Zwischenwänden (16) getragen, über die Hülsen (26) von der Masse elektrisch isoliert und mit dem Planetenräder-Trägerkäfig in Rotation mit der reduzierten Geschwindigkeit der Abtriebswelle (14) angetrieben sind, bei normaler Funktion entweder durch gegenseitige Anlage oder mittels einschaltbarer äusserer Schleifkontakte (51) unter Kurzschluss stehen, wobei die Kränze (25) in letzterem Fall einander nicht berühren, sondern gegeneinander isoliert sind und die Schleifkontakte (51) an ihrem Rand reiben und so die Speisung der Spulen mit Gleichstrom durch eine externe Quelle gestatten, was dank der Umkehrbarkeit der Elektromaschinen die Benützung der Reduziergetriebekupplung als Anlassermotor zulässt.

7. Reduziergetriebekupplung nach einem der Ansprüche 1 bis 3, dadurch gekennzeichnet, dass die Planetenräder (1) ihre Trägernaben (7), die sich in in den Scheiben (15) vorgesehenen Aussparungen (17) drehen, welche zur Rollbahn (8) hin offen sind, vollkommen vom Kranz (8) getragen haben, damit das so gebildete Lager unter Übertragung der Tangentialkraft des Abtriebsmoments vor der sehr starken Wirkung der Zentrifugalkraft geschützt ist.

8. Reduziergetriebekupplung nach einem der Ansprüche 1, 2, 3 und 7, bei welcher sämtliche drehenden Teile mittels einer Pumpe (45) mit einem Schmier- und Kühlfluid umlaufgeschmiert und -gekühlt sind, dadurch gekennzeichnet, dass sie ein Verteilerlager (19) umfasst, welches das Fluid mittels radialer Kanäle, die im Zapfen der auf der Seite der Abtriebswelle befindlichen Scheibe (15) vorgesehen sind, in einen axialen Kanal (20) einbringt, welcher in dem mit sehr hoher Geschwindigkeit drehenden Antriebsrotor eingearbeitet ist, um die Zentrifugalkraft auszunutzen, das Schmiermittel über radiale Kanäle voranzutreiben und so unter starkem Druck und mit grossem Durchsatz die Lager (22), Anschläge (33), Leitungen (21), Eisenspalte (11) und Leitungen (21) zu den Trägernaben (7) und den Rollbahnen (8) hin zu versorgen.

9. Reduziergetriebekupplung nach einem der Ansprüche 1, 2, 3, 7 und 8, dadurch gekennzeichnet, dass der Antriebsrotor (5) von zwei Lagern (22) getragen ist, die jeweils in einer der Scheiben (15) vorgesehen sind, die weiter als Stütze für zwei Anschlagflansche (33) dienen, wobei diese Lager des Typs mit freiem glattem Ring nach der bei kleinen Turbogebläsen für Verbrennungsmotoren verwendeten Technik sind, damit sie sich mit derselben Geschwindigkeit wie diese drehen.

10. Reduziergetriebekupplung nach einem der Ansprüche 1 bis 9, dadurch gekennzeichnet, dass sie an eine Mini- oder Mikroturbine mittels einer Übertragungswelle (35) von relativ geringem Querschnitt an den geriffelten Enden mit einer speziellen Zapfwellenmutter (39) ankuppelbar ist, wodurch eine Gleit-Übertragung von sehr geringer Masse entsteht, so dass die nachteiligen Zentrifugal- und Axialkräfte, die auf die Rotoren der Turbine und des Reduziergetriebes wirken können, auf zulässige Werte limitiert werden.

11. Reduziergetriebekupplung nach einem der Ansprüche 1 bis 10, zur Anwendung bei einem Turbogebläse zur Aufladung für einen Verbrennungsmotor, verwendet als Gas-Triebturbine und ausgestattet mit Verbrennungskammern mit Brenner zur Aufnahme der vom Gebläse abgegebenen Luft und des flüssigen oder gasförmigen, von einem Regler gesteuerten Brennstoffs, wobei sich die stark erhitzte und mit dem Verbrennungsgas vermischte Luft in der Turbine entspannt und dabei den klassischen Zyklus der Heissluftturbine mit Rückgewinnung von Wärme realisiert, davon jene, die durch den Joule-Effekt in dieser Reduziergetriebekupplung abgegeben worden ist, an welche notwendigenfalls eine zweite mechanische Reduktionsstufe mit Getriebe, am Ausgang derselben angeordnet, angeschlossen ist, dadurch gekennzeichnet, dass sie als Kupplung, das zu realisierende Mittel, ausgehend von dieser Mini- oder Mikroturbine, den Antriebsmotor irgendeines Empfängers bildet: Stromgenerator, Triebwerk mit Treibrad oder Propeller.

**Claims**

1. A reducing coupling of the induction type for very high speed rotating machines, wherein the gear teeth of the conventional mechanical planetary reduction gear train from which it is derived are replaced by electromagnetic induction and mechanical bearing effects obtained from a driving rotor (5) and a driven rotor (14) via planet wheels (1) carrying a magnetic field generating induced currents therein which by reacting with said induction field bring about, with a certain amount of slipping, the rotational entrainment of said planet wheels (1) characterized in that the driving rotor comprises at least one collar (5) cooperating with said planet wheels (1), said wheels being made to roll without slippage along circular tracks (8) arranged concentrically around the driving rotor, via their bearing hubs (7) applied thereto by centrifugal force; said resulting motion is picked up by the flanges (15) of a planet wheel cage (1) and transmitted to the output shaft (14) attached thereto, thus providing speed reduction in an effective ratio equal to the theoretical ratio augmented by the required slipping allowance.

2. Reducing coupling according to claim 1, characterized in that it further comprises at least one stationary peripheral ring (12) in the air gap (11) between said planet wheels to act as a center of induced currents opposing the rotational motion of said wheels in the event of slippage by the hubs (7) on their rolling tracks (8), thus providing a latent magnetic tooth operable to assist the mechanical rolling effect in transmitting the tapped torque when required.

3. Reducing coupling according to any one of claims 1 and 2, characterized in that said planet wheels consist of an axial body (13) with two bearing hubs (7) and a center disk (10) there between forming the common pole of two distinct magnetic circuits; said two circuits each consisting of a bell-shaped frame (9) attached to said axial body (13), clamped thereto by means of an attached annular raceway (42), a compartment (24) whereof receives either an annular permanent magnet or a magnetic field coil, and possibly an extra annular permanent magnet (40) on the rotational shaft (13) thereof, said two magnetic circuits closing at the collars (5) of the driving rotor on the one hand, and at a generating ring (25) on the other hand, said collars (5) and generating ring (25) being both made of either magnetic or non-magnetic metal, or of metal magnetized by inserting ferrous cores into the areas affected by the field.

4. Reducing coupling according to any one of claims 1, 2 and 3, characterized in that said planet wheels (1) obtain their magnetic field from induction coils the DC excitation current of which is provided by the machine itself, said current coming from induced DC voltage generated by said planet wheels' spinning in their own bell-shaped magnetic frames (9), said voltage resulting from the relative motion within said frames (9) of the magnetic field which is kept stationary, in spite of their rotation, in the fixed plane containing the collars (5) of the driving rotor, due to the permeability effect of their metal establishing the electric current from the frames (9), which are insulated from their core (7), and the coils (24), said arrangement avoiding the use of a rotating contact system.

5. Reducing coupling according to any one of claims 1, 2 and 3, characterized in that said planet wheels (1) obtain their magnetic field from induction coils the DC excitation current of which is provided by the machine itself, said current coming from the induced DC voltage generated by said planet wheels' spinning in two generating rings (25), said voltage resulting from the rotation of the evenly distributed field between two pole flanges (3) and (10) occurring in the generating rings (25), said current being collected by means of a rotating contact system consisting of non-magnetic metal spring washers (29) pressing against insulated bushings (30) connected to either the + or the − leads of the coils, the other lead being grounded to close the circuit.

6. Reducing coupling according to any one of claims 1 to 5, characterized in that said two generating rings (25), supported by the rods (16) which are electrically insulated from ground by their own bushings or sleeves (26) and rotatively driven with the planet wheel cage at the reduced speed of the output shaft (14), are short circuited in normal operation either by their mutual bearing surfaces or by switchable external brushes (51), said rings (25) in the latter case being not in contact with one another, but instead isolated from one another, and said brushes (51) rubbing on their periphery serving to power the coils from an outside DC source, thus enabling, given the inherent reversibility of electrical machines, use of said reducing coupling as a starter or cranking motor.

7. Reducing coupling according to any one of claims 1 to 3, characterized in that said bearing hubs (7) of said planet wheels (1) swivel in notches (17) provided in the end flanges (15), said notches opening towards the rolling track (8) such that the bearing thus formed, whilst transmitting the tangential force of the output torque, is freed from the very great stress from centrifugal force, the latter being entirely withstood by said rolling track (8).

8. Reducing coupling according to any one of claims 1, 2, 3 and 7, all of whose rotating parts are lubricated and cooled by a pump (45) circulated lubricating and cooling fluid, characterized in that it further comprises a distributing bearing (19) that introduces said fluid, via radia channels provided therefor in the output-shaft-side flange hub (15), into an axial bore (20) in the high speed driving rotor, in order to make use of centrifugal force to project said lubricant through radial ducts to the journal bearings (22), thrust bearings (33), ducts (21), air gaps (11), bearing hubs (7) and rolling tracks (8) at a high pressure and flow rate.

9. Reducing coupling according to any one of claims 1, 2, 3, 7 and 8, characterized in that said driving rotor (5) is supported on two bearings (22), one each in each of said end flanges (15), said bearings also serving as supports for two thrust collars (33) or bearings and being of the sliding plain bearing type typical of the bearing technology used in the small turboblowers of internal combustion engines so as to be able to rotat at the same speed as the latter.

10. Reducing coupling according to any one of claims 1 to 9, characterized in that it is adapted to be coupled to a mino- or micro-turbine via arelatively small-diameter transmission shaft (35) with splined ends and a special power take-off nut (39), so as to form a very lightweight sliding transmission, such that any adverse centrifugal or axial stresses likely to affect the rotors of the turbine and the reducer are kept to within permissible values.

11. Reducing coupling according to any one of claims 1 to 10, used in an internal combustion engine turbo-charger as a gas-powered driving turbine and equipped with combustion chambers with a burner receiving air from the blower as well as fuel in liquid or gas form and metered by a regulator, such that the greatly heated air mixed with the combustion gas expands in the turbine achieving the classical heat recovery hot air cycle wherein some of the recovered heat comes from the Joule effect in said reducing coupling, said reducing coupling driving a second, mechanical reduction gear train, as required, and thus serving in its coupling capacity, charcterized in that it constitutes, as driving motor, means to drive any type of load, including a generator, a wheel or propeller drive, from said mini- or micro-turbine.

Fig. 1

Fig. 2

Fig. 3

0161194

Fig. 4

17

Fig. 5

Fig. 6

Fig.7

Fig.8

Fig.9

0161194

Fig.10

Coupe OX  Fig.11a

F1

Fig.11b

Fig.12

Fig.13

27

Fig.14

Fig.15

Fig. 16

Fig. 17

Fig. 18